# EUROPEAN PATENT APPLICATION

(11) **EP 3 392 890 A1**
(43) Date of publication of application: **24.10.2018**
(21) Application number: 17762941.7
(22) Date of filing: 23.02.2017
(51) Int. Cl.: H01G 9/20, H01Q 1/40, H01Q 7/00

(54) **PHOTOELECTRIC CONVERSION DEVICE**

(30) Priority: 08.03.2016 JP 2016044970
(71) Applicant: Fujikura Ltd., Tokyo 135-8512 (JP)
(72) Inventor: TOPON Ong-on, Sakura-shi Chiba 285-8550 (JP); OKADA Kenichi, Sakura-shi Chiba 285-8550 (JP)
(74) Representative: Hoffmann Eitle
(86) International application number: PCT/JP2017/006955
(87) International publication number: WO 2017/154601

(57) **Abstract**

A photoelectric conversion device comprising at least one photoelectric conversion cell is disclosed. In the photoelectric conversion device, the photoelectric conversion cell has an electrode substrate, a counter substrate facing the electrode substrate, a ring-shaped sealing portion joining the electrode substrate and the counter substrate. The photoelectric conversion device comprises an antenna coil provided on a side of the electrode substrate which is opposite to the counter electrode and the antenna coil is disposed to overlap with the sealing portion in a case where the sealing portion and the antenna coil are viewed in a thickness direction of the sealing portion.

## Description

### TECHNICAL FIELD

The present invention relates to a photoelectric conversion device having an antenna coil.

### BACKGROUND ART

A photoelectric conversion device such as a dye-sensitized solar cell or an organic thin film solar cell has at least one photoelectric conversion element. Although in many cases the photoelectric conversion device is used only as a battery, in recent years, cases using a photoelectric conversion device having an antenna coil have been increasing to impart communication function.

For example, in Patent Document 1 described above, a photoelectric conversion device comprising a dye-sensitized solar cell and an antenna coil provided on the dye-sensitized solar cell is disclosed. In the publication, it is disclosed that the above-mentioned dye-sensitized solar cell is a conductive substrate including a transparent substrate, a counter substrate facing the conductive substrate, a ring-shaped sealing portion joining the conductive substrate and the counter substrate and that in a surface of the transparent substrate facing the counter substrate, the antenna coil is wound so as to surround the ring-shaped sealing portion.

### CITATION LIST

### PATENT DOCUMENT

Patent Document 1: JP 2015-56293 A

### SUMMARY OF THE INVENTION

### PROBLEM TO BE SOLVED BY THE INVENTION

However, the photoelectric conversion device dye-sensitized solar cell described in the above-mentioned Patent Document 1 has had the following problems.

That is, the photoelectric conversion device described in Patent Document 1 is provided such that the antenna coil surrounds the ring-shaped sealing portion on a side facing one surface of the transparent substrate. For this reason, the photoelectric conversion device requires space for installing the antenna coil outside of the ring-shaped sealing portion and on the one surface of the transparent substrate and increases an installation area. Herein, this space is not space which contributes to the power generation. For this reason, the larger this space becomes, the smaller the amount of the power generation per the installation area becomes. For this reason, the photoelectric conversion device described in Patent Document 1 has had room for improvement in terms of the amount of the power generation per an installation area.

The present invention has been made in consideration of the circumstances described above, and an object thereof is to provide a photoelectric conversion device which can increase the amount of the power generation per the installation area.

### MEANS FOR SOLVING PROBLEM

In order to solve the above-mentioned problem, the present invention is a photoelectric conversion device comprising at least one photoelectric conversion cell, the photoelectric conversion cell having an electrode substrate, a counter substrate facing the electrode substrate, a ring-shaped sealing portion joining the electrode substrate and the counter substrate, the photoelectric conversion device comprising an antenna coil provided on a side of the electrode substrate which is opposite to the counter substrate, wherein the antenna coil is disposed to overlap with the sealing portion in a case where the sealing portion and the antenna coil are viewed in a thickness direction of the sealing portion.

According to the photoelectric conversion device, the antenna coil is disposed on a side of the electrode substrate which is opposite to the counter substrate to overlap with the sealing portion in a case in which the sealing portion and the antenna coil are viewed in a thickness direction of the sealing portion. For this reason, in the electrode substrate, it is not required to provide space for installing the antenna coil outside of the ring-shaped sealing portion. For this reason, according to the photoelectric conversion device, it is possible to increase the amount of the power generation per an installation area.

It is preferable that the above-mentioned photoelectric conversion device further comprise an insulating portion provided on a side of the electrode substrate which is opposite to the counter substrate and that the insulating portion have a resin layer provided to cover the antenna coil.

In this case, the antenna coil is protected by the resin layer contained in the insulating portion. For this reason, occurrence of flaws such as scratches is sufficiently prevented. In addition, it is sufficiently suppressed that moisture adheres to the antenna coil. For this reason, since crossing of moisture over the antenna coil is sufficiently suppressed and a short circuit in the antenna coil is suppressed, the antenna can sufficiently retain function as an antenna. Further, since oxidation of the antenna coil as well is sufficiently suppressed, the decrease of the resistance of the antenna coil can also be suppressed. Moreover, since the antenna coil is covered with the resin layer, the rigidity can also be imparted to the antenna coil.

In the above-mentioned photoelectric conversion device, the insulating portion preferably contains an ultraviolet absorbing agent.

In this case, an ultraviolet ray of light incident on the photoelectric conversion device is absorbed by the ultraviolet absorbing agent contained in the insulating portion. For this reason, deterioration of the photoelectric conversion cell due to the ultraviolet rays is more sufficiently suppressed. As a result, durability of the photoelectric conversion device of the present invention can be more sufficiently improved.

In the above-mentioned photoelectric conversion device, it is preferable that the insulating portion have a support substrate supporting the antenna coil and an adhesive layer adhering the support substrate and the electrode substrate, the electrode substrate has a transparent substrate, the adhesive layer have a refractive index between a refractive index of the transparent substrate and a refractive index of the support substrate.

In this case, reflection of light can be reduced on an interface between the transparent substrate and the adhesive layer and an interface between the adhesive layer and the supporting substrate. For this reason, more sufficient amount of light can be led to the photoelectric conversion cell.

It is preferable that the above-mentioned photoelectric conversion device further comprise a light shielding portion which is provided on a side of the electrode substrate which is opposite to the counter substrate and shields light, and that the light shielding portion is disposed to overlap with the sealing portion in a case where the light shielding portion and the sealing portion are viewed in a thickness direction of the sealing portion.

In this case, the light shielding portion is disposed to overlap with the sealing portion in a case where the light shielding portion and the sealing portion are viewed in a thickness direction of the sealing portion. For this reason, it is sufficiently suppressed that light is incident on the sealing portion by the light shielding portion and thus deterioration of the sealing portion due to light can be more sufficiently suppressed.

In the above-mentioned photoelectric conversion device, for example, the photoelectric conversion cell is composed of a dye-sensitized solar cell.

In the above-mentioned photoelectric conversion device, it is preferable that the antenna coil be provided to be wound along the sealing portion in a case where the sealing portion and the antenna coil are viewed in a thickness direction of the sealing portion and a gap between the antenna coils adjacent to each other be smaller than a width of the antenna coil.

In this case, the amount of light incident on the sealing portion can be reduced by the antenna coil. For this reason, deterioration of the sealing portion can be sufficiently suppressed and thus durability of the photoelectric conversion device can be improved.

Incidentally, in the present invention, "a thickness direction of the sealing portion" refers to a direction orthogonal to an interface between the electrode substrate and the sealing portion, or a direction orthogonal to an interface between the counter substrate and the sealing portion.

In addition, "a width of a gap between the antenna coils adjacent to each other" refers to a shortest distance between the antenna coils adjacent to each other in a case where a gap between the antenna coils adjacent to each other is viewed in a thickness direction of the sealing portion.

### EFFECT OF THE INVENTION

According to the present invention, a photoelectric conversion device which can increase the amount of the power generation per an installation area.

### BRIEF DESCRIPTION OF DRAWINGS

Fig. 1 is a plan view illustrating a first embodiment of a photoelectric conversion device of the present invention;
Fig. 2 is a cross-sectional view taken along the line II-II of Fig.1;
Fig. 3 is a cross-sectional view illustrating an antenna coil of Fig.1; and
Fig. 4 is an end view of the cut section illustrating a second embodiment of the photoelectric conversion device of the present invention.

### MODE(S) FOR CARRYING OUT THE INVENTION

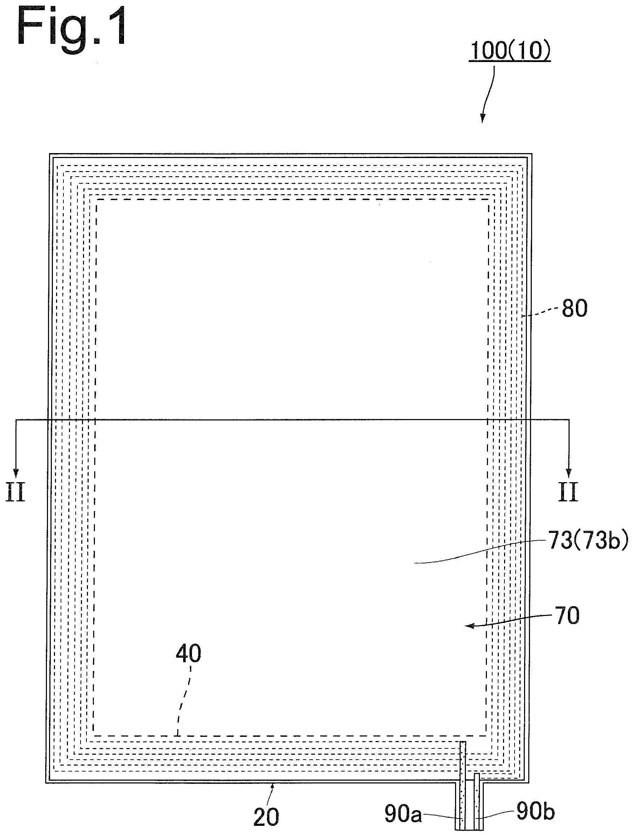

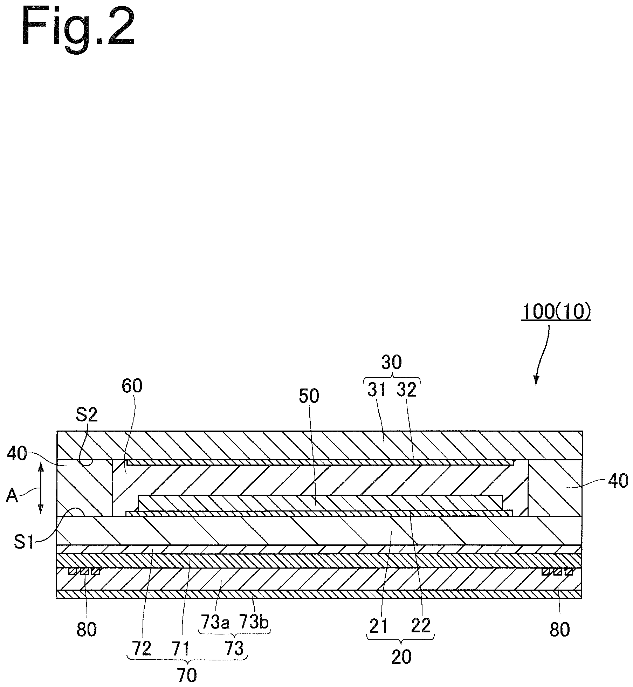

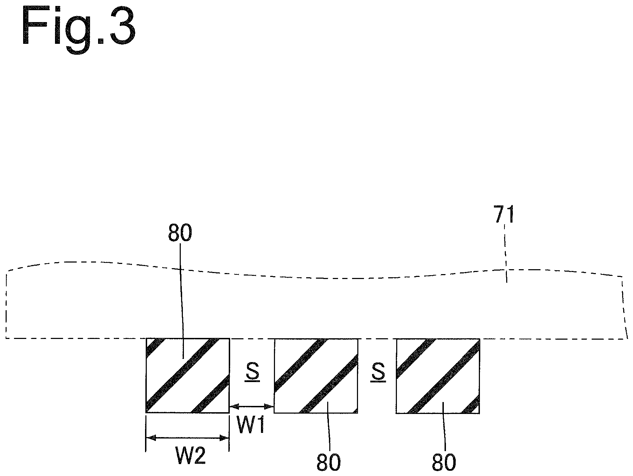

Hereinafter, embodiments of a photoelectric conversion device according to the present invention will be described in detail with reference to Fig. 1 and Fig. 2. Incidentally, Fig. 1 is a plan view illustrating a first embodiment of a photoelectric conversion device of the present invention, Fig. 2 is a cross-sectional view taken along the line II-II of Fig.1 and Fig. 3 is a cross-sectional view illustrating an antenna coil of Fig.1.

As illustrated in Fig. 1 and Fig. 2, a photoelectric conversion device 100 comprises a photoelectric conversion cell 10. In this embodiment, the photoelectric conversion cell 10 is composed of a photoelectric conversion cell using a dye. The photoelectric conversion cell 10 has an electrode substrate 20, a counter substrate 30 facing the electrode substrate 20, a ring-shaped sealing portion 40 joining the electrode substrate 20 and the counter substrate 30, an oxide semiconductor layer 50 provided on a surface of the electrode substrate 20 which is on a side facing the counter substrate 30, a dye supported on the oxide semiconductor layer 50, and an electrolyte 60 provided between the electrode substrate 20 and counter substrate 30.

In addition, the photoelectric conversion device 100 further comprises an insulating portion 70 provided on a side of the electrode substrate 20 which is opposite to the counter substrate 30, and an antenna coil 80 is provided inside the insulating portion 70. The antenna coil 80 is disposed to overlap with the sealing portion 40, in a case where the sealing portion 40 and the antenna coil 80 are viewed in a thickness direction A of the sealing portion 40, namely, a direction orthogonal to an interface

S1 between the electrode substrate 10 and the sealing portion 40 or a direction orthogonal to an interface S2 between the counter substrate 30 and the sealing portion 40. The antenna coil 80 is provided to wind along the sealing portion 40 in a case where the sealing portion 40 and the antenna coil 80 are viewed in a thickness direction A of the sealing portion 40. To both ends of the antenna coil 80 terminal portions 90a and 90b are connected, respectively (see Fig.1).

The electrode substrate 20 comprises a transparent substrate 21 and a transparent conductive layer 22 as an electrode which is provided on a side of the transparent substrate 21 facing the counter substrate 30.

The counter substrate 30 comprises a conductive substrate 31 and a catalyst layer 32 which is provided on a side of the conductive substrate 31 facing the electrode substrate 20 and contributes to reduction of the electrolyte 60.

The insulating portion 70 has a support substrate 71 supporting the antenna coil 80, an adhesive layer 72 adhering the support substrate 71 and the electrode substrate 20 and a resin layer 73 provided to cover the antenna coil 80. In this embodiment, the resin layer 73 has a cover layer 73a directly covering the antenna coil 80 and a protection layer 73b provided on the cover layer 73a.

In addition, in this embodiment, the insulating portion 70 contains an ultraviolet absorbing agent.

According to this photoelectric conversion device 100, the antenna coil 80 is disposed on a side of the electrode substrate 20 which is opposite to the counter substrate 30 to overlap with the sealing portion 40 in a case in which the sealing portion 40 and the antenna coil 80 are viewed in a thickness direction A of the sealing portion 40. For this reason, in the electrode substrate 20, it is not required to provide space for installing the antenna coil 80 outside of the ring-shaped sealing portion 40. For this reason, according to the photoelectric conversion device 100, it is possible to increase the amount of the power generation per an installation area. In addition, according to the photoelectric conversion device 100, in a case where light is incident on the photoelectric conversion cell 10 from a side facing the electrode substrate 20, light is reflected by the antenna coil 80. Accordingly, it is possible to reduce the amount of light incident on the sealing portion 40 and thus deterioration of the sealing portion 40 due to light can be sufficiently suppressed. For this reason, according to the photoelectric conversion device 100, its durability can be improved.

In addition, the photoelectric conversion device 100 further comprises the insulating portion 70 which is provided on a side opposite to the electrode substrate 20 and the insulating portion 70 has the resin layer 73 provided to cover the antenna coil 80.

In this case, the antenna coil 80 is protected by the resin layer 73 contained in the insulating portion 70. For this reason, occurrence of flaws such as scratches in the antenna coil 80 is sufficiently prevented. In addition, it is sufficiently suppressed that moisture adheres to the antenna coil 80. For this reason, since crossing of moisture over the antenna coil 80 is sufficiently suppressed and a short circuit in the antenna coil 80 is suppressed, the antenna coil can sufficiently retain function as an antenna. Further, since oxidation of the antenna coil 80 as well is sufficiently suppressed, the decrease of the resistance of the antenna coil 80 can also be suppressed. Moreover, since the antenna coil 80 is covered with the resin layer 73, the rigidity can also be imparted to the antenna coil 80.

In addition, in this embodiment, since the insulating portion 70 contains the ultraviolet absorbing agent, an ultraviolet ray of light incident on the photoelectric conversion device 100 is absorbed by the ultraviolet absorbing agent contained in the insulating portion 70. For this reason, deterioration of the photoelectric conversion cell 10 due to the ultraviolet ray is sufficiently suppressed.

Next, the electrode substrate 20, the counter substrate 30, the sealing portion 40, the oxide semiconductor layer 50, the electrolyte 60, the dye, the insulating portion 70, the antenna coil 80 and the ultraviolet absorbing agent will be described in detail.

### (Electrode Substrate)

As described above, the electrode substrate 20 has the transparent substrate 21 and the conductive substrate 22 as an electrode which is provided on a side of the transparent substrate 21 facing the counter substrate 30.

### (Transparent substrate)

The material constituting the transparent substrate 21 may be a transparent insulating material, for example, and examples of such a transparent material include glass such as borosilicate glass, soda lime glass, glass which is made of soda lime and whose iron component is less than that of ordinary soda lime glass, and quartz glass, polyethylene terephthalate (PET), polyethylene naphthalate (PEN), polycarbonate (PC), and polyethersulfone (PES). The thickness of the transparent substrate 21 is appropriately determined depending on the size of the photoelectric conversion cell 10 and is not particularly limited, but it may be set to the range of from 0.050 to 10 mm, for example.

### (Transparent Conductive Layer)

Examples of the material constituting the transparent conductive layer 22 include a conductive metal oxide such as indium-tin-oxide (ITO), tin oxide (SnO₂), and fluorine-doped-tin-oxide (FTO). The transparent conductive layer 22 may be constituted by a single layer or a laminate consisting of a plurality of layers containing different conductive metal oxides. It is preferable that the transparent conductive layer 22 contain FTO since the transparent conductive layer 22 exhibits high heat resistance and chemical resistance in a case in which the transparent conductive layer 22 is constituted by a single layer. The thickness of the transparent conductive layer 22 may be set to the range of from 0.01 to 2 µm, for example.

### (Counter Substrate)

As described above, the counter substrate 30 comprises the conductive substrate 31 and the catalyst layer 32 which is provided on a side of the conductive substrate 31 facing the electrode substrate 20 and contributes to reduction of t he electrolyte 60.

The conductive substrate 31 may be constituted by a corrosion-resistant metal material such as titanium, nicke 1, molybdenum, tungsten, aluminum, or stainless steel. Moreo ver, the conductive substrate 31 may be a laminate in which a conductive layer composed of a conductive oxide such as IT O or FTO is formed as an electrode on the transparent substr ate 21 described above. The thickness of the conductive subs trate 31 is appropriately determined depending on the size o f the photoelectric conversion cell 10, and is not particula rly limited, but may be set to 0.005 mm to 0.1 mm, for exampl e.

The catalyst layer 32 is constituted by a conductive material. Examples of the conductive material include a metal material such as platinum, a carbon-based material and a conductive polymer. Here, a carbon nanotube is preferably used as the carbon-based material.

### (Sealing portion)

Examples of the sealing portion 40 include a resin such as a thermoplastic resin including a modified polyolefin resin or a vinyl alcohol polymer, or an ultraviolet curable resin. Examples of the modified polyolefin resin include an ionomer, an ethylene-vinyl acetic anhydride copolymer, an ethylene-methacrylic acid copolymer and an ethylene-vinyl alcohol copolymer.

### (Oxide Semiconductor Layer)

The oxide semiconductor layer 50 is composed of oxide semiconductor particles. The oxide semiconductor particles are composed of, for example, titanium oxide (TiO₂), zinc oxide (ZnO), tungsten oxide (WO₃), niobium oxide (Nb₂O₅), strontium titanate (SrTiO₃), tin oxide (SnO₂), indium oxide (In₃O₃), zirconium oxide (ZrO₂), tallium oxide (Ta₂O₅), lanthanum oxide (La₂O₃), yttrium oxide (Y₂O₃), holmium oxide (Ho₂O₃), bismuth oxide (Bi₂O₃), cerium oxide (CeO₂), aluminum oxide (Al₂O₃) or two or more kinds of these. The thickness of the oxide semiconductor layer 50 may be set to 0.1 µm to 100 µm, for example.

### (Electrolyte)

The electrolyte 60 contains a redox couple and an organic solvent. It is possible to use acetonitrile, methoxy acetonitrile, methoxy propionitrile, propionitrile, ethylene carbonate, propylene carbonate, diethyl carbonate, γ-butyrolactone, valeronitrile, or pivalonitrile as the organic solvent. Examples of the redox couple include a redox couple such as a zinc complex, an iron complex, and a cobalt complex in addition to a redox couple containing a halogen atom such as iodide ion/polyiodide ion (for example, I⁻/I₃⁻) or bromide ion/polybromide ion. Incidentally, iodide ion/polyiodide ion can be formed by iodine (I₂) and a salt (ionic liquid or a solid salt) containing an iodide (I⁻) as an anion. In a case of using ionic liquid having an iodide as an anion, only iodine may be added. In a case of using an organic solvent, or ionic liquid other than iodide as an anion, a salt containing iodide (I⁻) as an anion, such as LiI or tetrabutylammonium iodide may be added. In addition, the electrolyte 60 may use ionic liquid instead of the organic solvent. As the ionic liquid, for example, a known iodine salt, such as a pyridinium salt, an imidazolium salt, or a triazolium salt is used. As such an iodine salt, for example, 1-hexyl-3-methylimidazolium iodide, 1-ethyl-3-propylimidazolium iodide, 1-ethyl-3-methylimidazolium iodide, 1,2-dimethyl-3-propylimidazolium iodide, 1-butyl-3-methylimidazolium iodide, or 1-methyl-3-propylimidazolium iodide is preferably used.

In addition, the electrolyte 60 may use a mixture of the above-mentioned ionic liquid and the above-mentioned organic solvent instead of the above-mentioned organic solvent.

In addition, it is possible to add an additive to the electrolyte 60. Examples of the additive include benzimidazole such as 1-methylbenzimidazole (NMB) or 1-butylbenzimidazole (NBB), LiI, tetrabutylammonium iodide, 4-t-butylpyridine and guanidium thiocyanate. Among them, benzoimidazole is preferable as the additive.

Moreover, as the electrolyte 60, a nanocomposite gel electrolyte which is a quasi-solid electrolyte obtained by kneading nanoparticles such as SiO₂, TiO₂ and carbon nanotubes with the above-mentioned electrolyte to form a gel-like form may be used, or an electrolyte gelled using an organic gelling agent such as polyvinylidene fluoride, a polyethylene oxide derivative and an amino acid derivative may also be used.

### <Dye>

As the dye, for example, a photosensitizing dye such as a ruthenium complex having a ligand including a bipyridine structure or a terpyridine structure, an organic dye including porphyrin, eosin, rhodamine or merocyanine; or an organic-inorganic composite dye including a halogenated lead-based perovskite crystal are exemplified. As the halogenated lead-based perovskite, for example, CH₃NH₃PbX₃ (X = Cl, Br, I) is used. Among the above-mentioned dyes, a ruthenium complex having a ligand including a bipyridine structure or a terpyridine structure is preferable. In this case, it is possible to further improve the photoelectric conversion characteristics of the photoelectric conversion device 100. Incidentally, in a case using a photosensitizing dye as the dye, the photoelectric conversion device 100 becomes a dye-sensitized photoelectric conversion device.

### <Insulating Portion>

As described above, the insulating portion 70 has the support substrate 71 supporting the antenna coil 80, the adhesive layer 72 adhering the support substrate 71 and the electrode substrate 20, and the resin layer 73 provided to cover the antenna coil 80.

### (Support Substrate)

The support substrate 71 may be composed of an insulating material. Examples of such an insulating material include a resin material such as a PET film or a PEN film and an inorganic material such as glass.

The thickness of the support substrate 71 is not particularly limited, but may be 20 to 4000 µm, for example.

### (Adhesive Layer)

The adhesive layer 72 may be composed of an adhesive capable of adhering the support substrate 71 and the electrode substrate 20. As such an adhesive, an acrylic-based adhesive or an epoxy-based adhesive can be used. These adhesives may be any of a photocurable adhesive, a thermosetting adhesive or a two-liquid mixing type adhesive.

However, the adhesive layer 72 preferably has a refractive index between a refractive index of the transparent substrate 11 and a refractive index of the support substrate 71. Specifically, the adhesive layer 72 preferably has a refractive index between a refractive index of the transparent substrate 11 and a refractive index of the support substrate 71 in a absorption peak wavelength of the dye supported on the oxide semiconductor layer 50. In this case, reflection of light can be reduced in an interface between the transparent substrate 11 and the adhesive layer 72, and, an interface between the adhesive layer 72 and the support substrate 71.

### (Resin Layer)

The resin layer 73 has a cover layer 73a directly covering the antenna coil 80 and a protection layer 73b provided on the cover layer 73a.

The cover layer 73a may be composed of a resin material, but as such a resin material, a transparent resin such as an epoxy resin, an acrylic resin, a polyester resin, an urethane resin, a vinyl resin, a silicone resin, a phenol resin, a polyimide resin or a mixture thereof is preferable in view of suppressing a short circuit of the antenna coil 80 due to moisture.

The protection layer 73b is composed of the same resin material as the cover layer 73a or an inorganic material such as glass. In addition, the protection layer 73b may be composed of the same material as or different material from the cover layer 73a. In a case where the protection layer 73b is composed of a different material from the cover layer 73a, the protection layer 73b is preferably composed of a material which has abrasion resistance larger than that of the cover layer 73a. In this case, in a case where the cover layer 73a is composed of an epoxy resin or an acrylic resin, for example, the protection layer 73b may be composed of a material such as a PET film, a PEN film or glass.

### <Antenna Coil>

The antenna coil 80 is composed of a conductive material. Examples of the conductive material include a metal material such as silver or copper and a carbon material.

The width W1 of a gap S between the antenna coils 80 adjacent to each other may be smaller than or not less than the width W2 of the antenna coil 80, but, is preferably smaller than the width W2 of the antenna coil 80 (see Fig.3).

In this case, since the amount of light incident on the sealing portion 40 can be reduced, deterioration of the sealing portion 40 can be sufficiently suppressed and durability of the photoelectric conversion device 100 can be improved.

Herein, a ratio of the width W2 of the antenna coil 80 to the width W1 of the gap S (W2/W1) is not particularly limited as long as it is more than 1, but this ratio (R1) is preferably 1.5 or more, more preferably 2.0 or more. However, R1 is preferably 20 or less, more preferably 10 or less.

The number of turns of the antenna coil 80 is not particularly limited, but it is preferable to set the number of turns of the antenna coil 80 to the number of turns with which the width W1 of the gap S between the antenna coils 80 is smaller than the width W2 of the antenna coil 80. In this case, since the amount of light incident on the sealing portion 40 can be reduced, deterioration of the sealing portion 40 can be sufficiently suppressed and thus durability of the photoelectric conversion device 100 can be improved.

### <Ultraviolet Absorbing Agent>

As described above, the ultraviolet absorbing agent is contained in the insulating portion 70. In the insulating portion 70, the ultraviolet absorbing agent may be contained in at least one of the support substrate 71, the adhesive layer 72 and the resin layer 73.

The ultraviolet absorbing agent may be an ultraviolet absorbing material. Examples of such an ultraviolet absorbing material include a cerium oxide, a zinc oxide, a triazine derivative, a benzotriazole derivative and a benzophenone derivative. These can be used singly or in a combination of two or more kinds thereof.

Incidentally, the addition rate of the ultraviolet absorbing agent is not particularly limited, but the addition rate of the ultraviolet absorbing agent in the total of the transparent substrate 11 and the insulating portion 70 is preferably 0.01 to 50 % by mass.

The present invention is not limited to the above-mentioned embodiment. For example, in the above-mentioned embodiment, the insulating portion 70 has the support substrate 71 and the adhesive layer 72, but the insulating portion 70 may not necessarily have the support substrate 71 and the adhesive layer 72. In this case, the electrode substrate 20 can be used as the support substrate 71 of the antenna coil 80.

Further, in the above-mentioned embodiment, the antenna coil 80 is provided on a side of the support substrate 71 which is opposite to the electrode substrate 20, but the antenna coil 80 may be provided on a side of the support substrate 71 facing the electrode substrate 20. In this case, the adhesive layer 72 becomes a resin layer covering the antenna coil 80. In addition, in this case, since the antenna coil 80 is protected by the support substrate 71, the cover layer 73a and the protection layer 73b may be omitted. Further, in the above-mentioned embodiment, the insulating portion 70 is not necessarily required, and hence can be omitted.

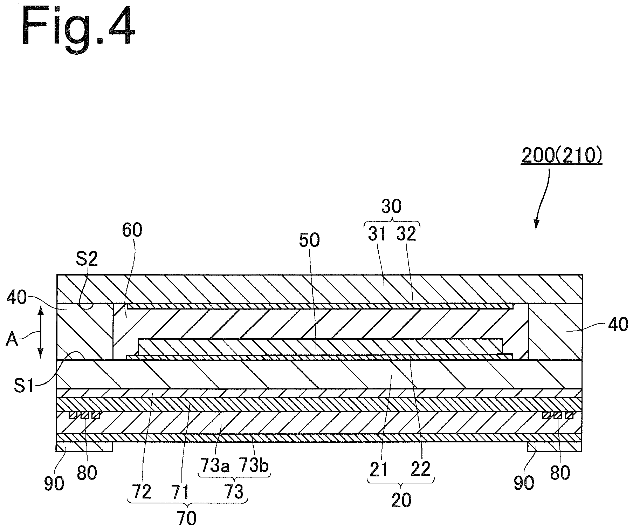

In addition, a light shielding portion shielding light by absorption or reflection may further be provided on a side of the electrode substrate 20 which is opposite to the counter substrate 30. Herein, the light shielding portion is disposed in a region overlapping with the sealing portion 40 in a case where the light shielding portion is viewed in a thickness direction A of the sealing portion 40. In this case, since the light shielding portion is disposed to overlap with the sealing portion 40 in a case where the light shielding portion and the sealing portion 40 are viewed in a thickness direction A of the sealing portion 40, incidence of light on the sealing portion 40 can be sufficiently suppressed by the light shielding portion and thus deterioration of the sealing portion 40 due to light can be more sufficiently suppressed. As the light shielding portion, a colored resin material or a colored inorganic material can be used. As the colored resin material or the colored inorganic material, a material obtained by mixing a coloring agent with a transparent resin material or a transparent inorganic material, a resin material itself or an inorganic material colored itself can be used. The light shielding portion may be separately provided on a surface of the support substrate 71 on which the antenna coil 80 is not provided, or may be one obtained by coloring only portions overlapping with the sealing portion 40 in at least one of the adhesive layer 72, the cover layer 73a and the protection layer 73b. In a photoelectric conversion cell 210 of a photoelectric conversion device 200 illustrated in Fig.4, for example, a light shielding portion 90 may be provided on a surface of the resin layer 73 on which the antenna coil 80 is not provided (for example, a surface of the protection layer 73b), of the support substrate 71. Incidentally, the above-mentioned coloring agent may be any agent as long as it can shield light, but examples of such a coloring agent include an oxide of transition metal, carbon-based material and organic dyes. These can be used singly or in a combination of two or more kinds thereof. Examples of such an oxide of transition metal include a copper oxide, an iron oxide, a cobalt oxide and a manganese oxide. These can be used singly or in a combination of two or more kinds thereof. Furthermore, as the light shielding portion, a non-transparent metal material can also be used as long as it is not electrically connected with the antenna coil 80.

Furthermore, in the above-mentioned embodiment, in the photoelectric conversion cell 10, the oxide semiconductor layer 50 is provided on the electrode substrate 20, but the oxide semiconductor layer 50 may be provided on the counter substrate 30. In this case, the catalyst layer 32 is provided on the electrode substrate 20.

Further, in the above-mentioned embodiment, the ultraviolet absorbing agent is included in the insulating portion 70, but the ultraviolet absorbing agent may not be included in the insulating portion 70.

In addition, in the above-mentioned embodiment, the counter substrate 30 is composed of a counter electrode and the electrode substrate 20 and the counter substrate 30 are connected by the sealing portion 40, but, in a case where a porous insulating layer impregnated with the electrolyte 60 and an electrode layer as the counter electrode are laminated in this order on the oxide semiconductor layer 50 and between the electrode substrate 20 and the counter substrate 30, the counter substrate 30 may be composed of an insulating base material instead of the counter electrode.

Moreover, in the above-mentioned embodiment, the photoelectric conversion device 100 has one photoelectric conversion cell 10, but, the photoelectric conversion device 100 may comprise a plurality of photoelectric conversion cells 10. Herein, the plurality of photoelectric conversion cells 10 may be connected in series or may be connected in parallel.

Further, in the above-mentioned embodiment, a photoelectric conversion cell using a dye is used as the photoelectric conversion cell 10, but the photoelectric conversion cell 10 may have photoelectric conversion function and hence as the photoelectric conversion cell 10 an organic thin film solar cell can also be used.

### EXPLANATIONS OF LETTERS OR NUMERALS

10 photoelectric conversion cell
20 electrode substrate
21 transparent substrate
30 counter substrate
40 sealing portion
70 insulating portion
71 support substrate
72 adhesive layer
73 resin layer
80 antenna coil
90 light shielding portion
100 photoelectric conversion device
A thickness direction of sealing portion
S gap between antenna coils adjacent to each other
W1 width of gap between antenna coils adjacent to each other
W2 width of antenna coil

## Claims

1. A photoelectric conversion device, comprising at least one photoelectric conversion cell, the photoelectric conversion cell having an electrode substrate, a counter substrate facing the electrode substrate, a ring-shaped sealing portion joining the electrode substrate and the counter substrate,
the photoelectric conversion device comprising an antenna coil provided on a side of the electrode substrate which is opposite to the counter electrode,
wherein the antenna coil is disposed to overlap with the sealing portion in a case where the sealing portion and the antenna coil are viewed in a thickness direction of the sealing portion.

2. The photoelectric conversion device according to claim 1, further comprising an insulating portion provided on a side of the electrode substrate which is opposite to the counter substrate,
wherein the insulating portion has a resin layer provided to cover the antenna coil.

3. The photoelectric conversion device according to claim 2,
wherein the insulating portion contains an ultraviolet absorbing agent.

4. The photoelectric conversion device according to claim 2 or 3,
wherein the insulating portion has a support substrate supporting the antenna coil and an adhesive layer adhering the support substrate and the electrode substrate,
wherein the electrode substrate has a transparent substrate, and
wherein the adhesive layer has a refractive index between a refractive index of the transparent substrate and a refractive index of the support substrate.

5. The photoelectric conversion device according to any one of claims 1 to 4, further comprising a light shielding portion provided on a side of the electrode substrate which is opposite to the counter substrate and shields light,
wherein the light shielding portion is disposed to overlap with the sealing portion in a case where the light shielding portion and the sealing portion are viewed in a thickness direction of the sealing portion.

6. The photoelectric conversion device according to any one of claims 1 to 5,
wherein the photoelectric conversion cell is composed of a dye-sensitized solar cell.

7. The photoelectric conversion device according to any one of claims 1 to 6,
wherein the antenna coil is provided to be wound along the sealing portion in a case where the sealing portion and the antenna coil are viewed in a thickness direction of the sealing portion, and
wherein a gap between the antenna coils adjacent to each other is smaller than a width of the antenna coil.
